# FASCICULE DE BREVET EUROPEEN

(11) **EP 0 683 454 B1**
(45) Date de publication et mention de la délivrance du brevet: **12.11.1997**
(21) Numéro de dépôt: 95470020.9
(22) Date de dépôt: 12.05.1995
(51) Int. Cl.: G06F 11/00

(54) **Procédé pour tester le déroulement d'un programme d'instructions**
Verfahren zur Überwachung des Programmablaufs
Method for testing program flow

(30) Priorité: 20.05.1994 FR 9406492
(43) Date de publication de la demande: 22.11.1995
(73) Titulaire: SGS-THOMSON MICROELECTRONICS S.A., 94250 Gentilly (FR)
(72) Inventeur: Klingler, Stéphan, F-57000 Metz (FR)
(74) Mandataire: Schmit, Christian Norbert Marie

(56) Documents cités:
- EP-A- 0 516 172
- IBM TECHNICAL DISCLOSURE BULLETIN, vol.22, no.8B, Janvier 1980, NEW YORK US pages 3780 - 3781 J. A. KISELAK ET AL. 'Microprogram trace facility'
- COMPUTER DESIGN, vol.32, no.1, Janvier 1993, LITTLETON, MASSACHUSETTS US pages 65 - 74 KEN MARRIN 'DSP development tools engage mainstream designers'

## Description

L'invention concerne un procédé pour tester le déroulement d'un programme d'instructions exécutées par un circuit intégré spécialisé, ainsi qu'un circuit intégré spécialisé, conçu pour la mise en oeuvre de ce procédé.

Les circuits intégrés spécialisés, ou ASIC (de l'anglais "Application Specific Integrated Circuit") sont des circuits intégrés réalisés sur une puce unique à la demande de l'utilisateur.

Certains circuits intégrés spécialisés comprennent une unité centrale (par exemple un processeur de traitement du signal ou DSP, dans le cas d'un circuit intégré dédié au traitement de signal) associée à un certain nombre de dispositifs dépendant de l'application du circuit : mémoires, interfaces...

L'utilisateur fournit au fabricant le programme d'application du circuit et des informations sur la configuration de circuit souhaitée telles que le type et le volume des mémoires utiles ou la nature des dispositifs d'interface du circuit. Le circuit intégré est alors réalisé sur une puce en associant à l'unité centrale les dispositifs spécifiés, notamment une mémoire morte (ROM) contenant le programme d'application.

Une fois que la puce de silicium formant le circuit spécialisé a été fabriquée, différents tests doivent lui être appliqués pour vérifier le bon fonctionnement. Habituellement, le fabricant du circuit teste la constitution du circuit (caractéristiques du composant, connexions...) et l'utilisateur teste son programme d'application ou la manière avec laquelle le circuit l'exécute.

D'un point de vue déroulement de programme, les circuits intégrés mettent généralement en oeuvre un principe dit de pipeline.

Pour exécuter une instruction, il est nécessaire de positionner sur un bus d'adresses d'instructions reliant l'unité centrale à la mémoire contenant le programme dans lequel cette instruction prend place, l'adresse ou les adresses des mots formant cette instruction. Un mot correspond au contenu d'un emplacement de base de la mémoire. Si une instruction est codée sur un mot, elle nécessite un accès à la mémoire. Si une instruction est codée sur plusieurs mots, elle nécessite plusieurs accès à la mémoire avant d'être exécutée. Quand une adresse est positionnée sur le bus d'adresses, la mémoire lit l'emplacement correspondant à cette adresse et place le contenu de l'adresse ou mot sur un bus de données reliant la mémoire à l'unité centrale. Le contenu de l'adresse est décodé par l'unité centrale, puis l'instruction exécutée si tous les mots codant l'instruction ont été décodés. La structure pipeline consiste à placer sur le bus d'adresses d'instructions les adresses en même temps que l'on décode les mots correspondants aux adresses précédentes, et que l'on exécute les instructions correspondantes aux mots précédemment décodés. Ainsi, on autorise un déroulement rapide du programme puisque adressage, décodage et exécution sont effectués en parallèle.

Un problème du fonctionnement en pipeline est qu'il ne permet pas de connaître précisément le déroulement du programme, puisque même si le bus d'adresses d'instructions est accessible de l'extérieur du circuit, les adresses présentes sur le bus correspondent à des instructions qui vont être exécutées sans qu'on sache toujours ce qui a provoqué le positionnement de ces adresses sur le bus (par exemple, ce positionnement peut être provoqué par diverses instructions se trouvant à différents endroits du programme).

Au vu de ce qui précède, le but de la présente invention est de proposer un procédé pour tester le déroulement d'un programme d'instructions exécutées par un circuit intégré spécialisé.

L'invention propose ainsi un procédé pour tester le déroulement d'un programme d'instructions exécutées par un circuit intégré spécialisé comprenant une unité centrale, et des dispositifs dépendants de l'application du circuit, ces dispositifs comprenant au moins une mémoire de programme comprenant un programme d'instructions à exécuter, chaque instruction comprenant un ou plusieurs mots et durant un ou plusieurs cycles, chaque mot étant mémorisé à un emplacement de la mémoire, le traitement d'une instruction comprenant successivement :
- le positionnement par un compteur de programme de l'adresse du mot ou des adresses successives des mots de l'instruction sur un bus d'adresse d'instruction à n bits, n étant un entier, reliant l'unité centrale à la mémoire de programme,
- le positionnement par la mémoire de programme, après lecture de chaque mot, de ce mot sur un bus de données d'instruction reliant l'unité centrale à la mémoire,
- le décodage des mots par un séquenceur de l'unité centrale,
- et l'exécution de l'instruction par l'unité centrale,
caractérisé en ce que, pour chaque instruction, on mémorise dans le circuit intégré l'adresse d'un mot de cette instruction au cours du traitement de l'instruction, et l'adresse du mot à mémoriser est mémorisée au moment de l'exécution de l'instruction dont l'adresse est représentative.

Ainsi, le procédé prévoit de garder une information sur le déroulement du programme, en s'affranchissant du caractère volatil des adresses placées sur le bus d'adresses d'instructions. De plus, quelque soit le nombre de mots codant les instructions exécutées, le format de l' information mémorisée est identique pour toutes les instructions.

Dans une version préférée, l'adresse du mot à mémoriser est mémorisée au moment de l'exécution de l'instruction dont l'adresse est représentative.

De cette manière, on ne mémorise que les adresses utiles, c'est-à-dire celles d'instructions dont on est certain qu'elles ont produit un effet dans le circuit intégré, par exemple le positionnement d'une adresse sur le bus d'adresses d'instructions.

De préférence, l'adresse mémorisée est l'adresse du premier mot de l'instruction.

On s'affranchit donc de la connaissance du nombre de cycles d'horloge nécessaire au traitement des mots (en effet, des mots peuvent nécessiter plusieurs cycles d'horloge, pour leur décodage par exemple).

De préférence, l'adresse est mémorisée dans un regsitre parmi p registres parallèle-parallèle à n entrées et n sorties, avec p un entier, montés en série de manière à former une pile et reliés au bus d'adresse par le biais de n bascules à verrouillage et d'un registre parallèle-parallèle, à n entrées et n sorties, d'entrée de pile.

Ainsi, on mémorise simplement, de manière séquentielle, les adresses des premiers mots des instructions exécutées. En prévoyant de ne stocker l'adresse que d'un seul mot par instruction, on évite l'inconvénient de remplir la pile avec des adresses différentes représentatives d'une seule instruction à plusieurs mots, ce qui n'apporterait pas une information plus complète, et ne permettrait pas, à taille de pile égale, de connaître aussi précisément le déroulement du programme.

Un second aspect de l'invention est un circuit intégré spécialisé comprenant une unité centrale, et des dispositifs dépendants de l'application du circuit, ces dispositifs comprenant au moins une mémoire de programme comprenant un programme d'instructions à exécuter, chaque instruction comprenant un ou plusieurs mots et durant un ou plusieurs cycles, chaque mot étant mémorisé à un emplacement de la mémoire,
le traitement d'une instruction comprenant successivement :
- le positionnement par un compteur de programme de l'adresse du mot ou des adresses successives des mots de l'instruction sur un bus d'adresse d'instruction à n bits, n étant un entier, reliant l'unité centrale à la mémoire de programme,
- le positionnement par la mémoire de programme, après lecture de chaque mot, de ce mot sur un bus de données d'instruction reliant l'unité centrale à la mémoire,
- le décodage des mots par un séquenceur de l'unité centrale,
- et l'exécution de l'instruction par l'unité centrale,
caractérisé en ce qu'il comprend des moyens de mémorisation agencés pour mémoriser, lors du traitement de chaque instruction, l'adresse d'un mot de cette instruction et en ce que lesdits moyens de mémorisation sont agencés de manière telle que l'adresse du mot soit mémorisée au moment de l'exécution de l'instruction dont l'adresse est représentative.

Ce circuit est conçu pour la mise en oeuvre du procédé ci-dessus.

D'autres particularités et avantages de l'invention apparaîtront dans la description ci-après d'un exemple de réalisation préféré et non limitatif, lue conjointement aux dessins annexés, dans lesquels :
- la figure 1 est un schéma d'un circuit intégré spécialisé selon l'invention ;
- la figure 2 est un schéma de la partie du circuit de la figure 1 qui concerne la mémorisation des adresses des premiers mots des instructions exécutées,
- les figures 3, 4, 5 sont des diagrammes temporels illustrant la mise en oeuvre dans le circuit de la figure 1, du procédé selon l'invention.
- la figure 6 est un schéma d'une partie du circuit de la figure 1.

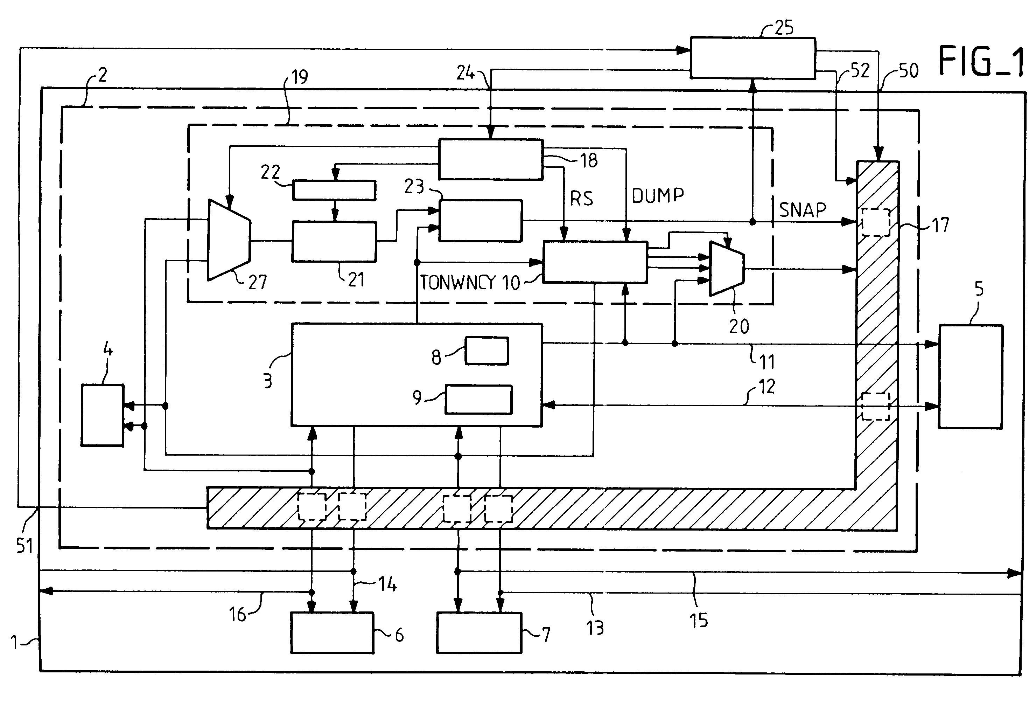

En référence à la figure 1, un circuit intégré 1 selon l'invention, réalisé sur une puce de silicium unique, comporte une unité centrale 2 et un certain nombre de dispositifs dépendant de l'application du circuit intégré. Par exemple, le circuit intégré 1 est dédié au traitement de signaux, et l'unité centrale 2 comporte les éléments essentiels d'un processeur de traitement du signal (DSP). L'unité centrale 2 comprend une unité de commande de programme 3 et des éléments repérés collectivement par une référence 4, tels qu'une unité de calcul par exemple.

Le circuit 1 comprend une mémoire de programmes 5 (par exemple à lecture seule ROM) contenant un programme d'application, et connectée à l'unité de commande de programme par le biais d'un bus d'adresses d'instructions 11 et un bus de données d'instructions 12.

Le circuit pourra comporter également d'autres mémoires 6 et 7, utilisées par exemple pour traiter des données en parallèle, chacune de ces mémoires étant reliée à l'unité de commande de programme 3 et à des accès primaires du circuit 1, respectivement par des bus d'adresses 13 et 14, et des bus de données 15 et 16.

On pourrait aussi considérer que les mémoires 5, 6, ou 7 fassent partie de l'unité centrale ou bien qu'elles soient externes au circuit 1.

Par la suite, on considère que le fonctionnement de l'unité centrale se caractérise par l'exécution d'instructions d'un programme contenu dans la mémoire de programmes 5.

L'unité de commande de programme 3 comprend un compteur de programme 8 pour positionner des adresses d'emplacement de la mémoire de programme 5 sur le bus d'adresses d'instructions 11 et un séquenceur 9 pour décoder les données présentes sur le bus de données d'instructions 12.

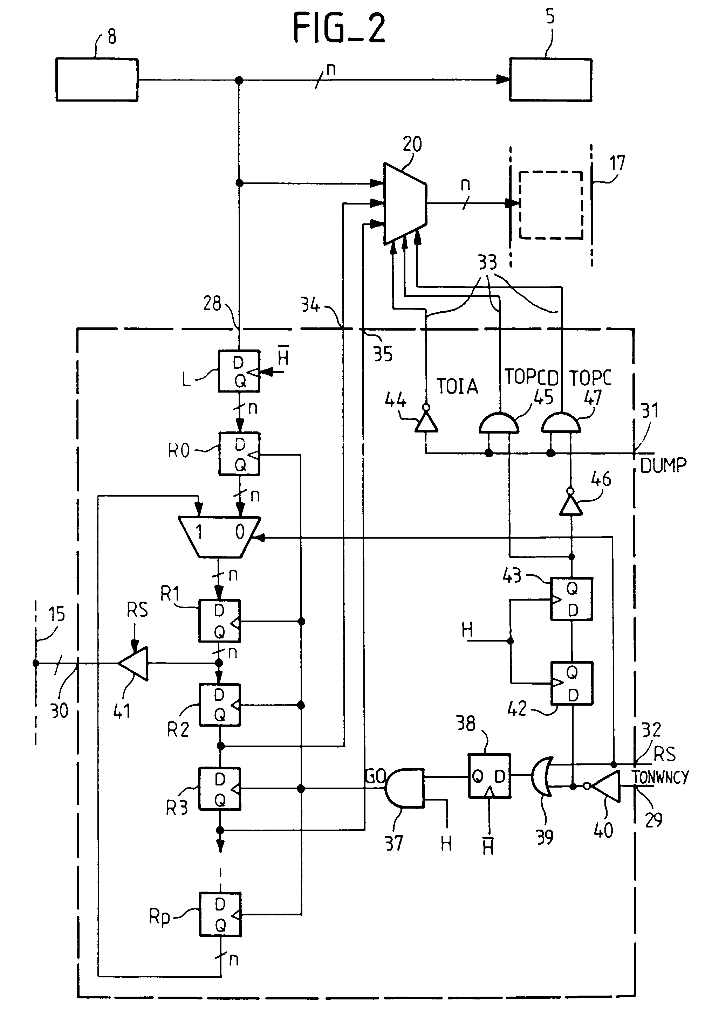

Pour mémoriser les adresses des premiers mots des instructions exécutées par l'unité de commande de programme, ces mots étant mémorisés dans la mémoire de programmes 5, l'unité centrale 2 comprend une unité d'émulation 19. Cette unité d'émulation 19 comprend un circuit de mémorisation 10, détaillé à la figure 2.

En général, pour des raisons de simplicité, les bus d'un type donné dans un circuit intégré (par exemple les bus d'adresses) comprennent un même nombre n de fils (avec n entier, typiquement n = 8 ou n = 16). Ainsi, dans le circuit 1, on considère que les bus d'adresses 11 et 13 comportent le même nombre n de fils.

Le circuit de mémorisation 10 comprend un port d'entrée 28 pour recevoir les lignes du bus d'adresses d'instructions 11, un port de sortie 30 relié au bus de données 15, deux ports de sortie 34 et 35 reliés à deux ports d'entrées d'un multiplexeur 20 (chaque port d'entrée du multiplexeur 20 étant formée en fait de n entrées), ce multiplexeur 20 comprend un troisième port d'entrée pour recevoir les lignes du bus d'adresses d'instructions 11. Le circuit de mémorisation 10 reçoit d'autre part des signaux de commande de l'unité de commande de programme sur une entrée 29 (signal TONWNCY), et d'un dispositif de contrôle d'émulation 18 sur deux entrées 31 et 32 (signaux DUMP et RS).

Typiquement, le test d'un programme, mis en oeuvre dans un circuit, ou émulation, est contrôlé par l'utilisateur, par le biais d'un dispositif de test 25 extérieur au circuit. Afin, entre autres, de minimiser le nombre de bornes d'accès au circuit, celui-ci comprend en général des circuits internes dédiés au contrôle d'émulation, reliés au dispositif de test par des bornes d'accès au circuit.

Ainsi, dans le circuit décrit, l'unité d'émulation 19 comprend un dispositif de contrôle d'émulation 18 qui est relié à un dispositif de test 25 extérieur au circuit 1 par le biais d'une ou de plusieurs bornes 24.

Le multiplexeur 20 a un port de sortie et reçoit trois signaux de commande de sortie du circuit de mémorisation (TOIA, TOPCD, TOPC) via trois sorties 33 de ce circuit pour relier sélectivement son port de sortie à l'un de ces ports d'entrée. Le port de sortie du multiplexeur 20 est relié à des entrées de cellules élémentaires d'un registre à décalage 17 formés de cellules élémentaires (représentées collectivement par des carrés en pointillés dans le registre à décalage) montées sur des lignes d'accès de l'unité de commande de programme (bus d'adresses 13 et 14, bus de données 15 et 16, bus de données d'instructions 12). Ce registre à décalage 17 permet classiquement (voir EP A O 578 540) d'échantillonner les valeurs des signaux présents sur les lignes d'accès de l'unité de commande de programme 3, ou de forcer des valeur sur ces lignes.

Le circuit 1 comprend une borne 50 qui correspond à l'entrée série du registre à décalage, une borne 51 qui correspond à la sortie série du registre à décalage, et des bornes d'entrée désignées collectivement par la référence 52 pour recevoir des signaux de commande destinés aux cellules du registre. L'entrée et la sortie du registre sont reliées classiquement au dispositif de test 25, ce dispositif fournissant les signaux de commande destinés aux cellules du registre 17.

Enfin, l'unité d'émulation 19 comprend un registre de mémorisation 22 ayant une entrée reliée au dispositif de contrôle d'émulation 18 et une sortie reliée à une entrée d'un circuit de comparaison 21, ce circuit de comparaison 21 ayant une autre entrée pour recevoir le signal présent à la sortie d'un multiplexeur 27 recevant en entrée les bus de données 15 et 16 et commandé par le dispositif de contrôle d'émulation 19. Ce circuit de comparaison 21 a une sortie pour fournir un signal de commande SNAP aux cellules du registre à décalage 17, par le biais d'un circuit logique 23, ce circuit logique ayant une entrée pour recevoir le signal de commande TONWNCY fourni à l'entrée 29 du circuit de mémorisation 10 par l'unité de commande de programme 3.

La figure 2 présente un exemple de réalisation du circuit de mémorisation 10. Chaque fil du port d'entrée 28 (qui en comprend n) est connecté respectivement à l'entrée d'une bascule à verrouillage, les n bascules étant représentées, pour des raisons de lisibilité, par une bascule unique L. Cette bascule L, formée par n bascules placées en parallèle, a n sorties connectées chacune à une entrée d'un registre maître-esclave. Ces n registres maîtres-esclaves sont, pour des raisons de lisibilité, également représentés collectivement par un registre maître-esclave R0, à n entrées et n sorties. Dans la suite de la description, sauf indication contraire, on considérera des registres maîtres-esclaves à n entrées et n sorties, formés en pratique de n registres maîtres-esclaves ayant chacun une entrée et une sortie.

Les sorties du registre R0 sont connectées à un premier port d'entrée d'un multiplexeur 36 (ce port comprenant n entrées bien sûr). Ce multiplexeur 36 a un port de sortie, connecté à n entrées d'un registre maître-esclave R1.

Le circuit de mémorisation 10 comporte ainsi p registres (p entier > 1) maîtres-esclaves, à n entrées et n sorties, référencés R1 à Rp montés en série, les n sorties d'un registre Ri (i entier compris entre 1 et p-1) étant connectées aux n entrées du registre Ri+1. Dans un exemple, p = 6.

Les n sorties du dernier registre Rp sont connectées à un deuxième port d'entrée (à n entrées bien sûr) du multiplexeur 36.

La bascule à verrouillage L reçoit un signal logique de commande /H tel que la bascule est transparente pour /H = 1 et bloquée pour /H = 0. En pratique, H est le signal logique complémentaire d'un signal d'horloge H, produit par exemple par un quartz, pour synchroniser le fonctionnement du circuit intégré 1, notamment l'adressage, le décodage et l'exécution des instructions du programme contenu dans la mémoire de programme 5.

Les registres maîtres-esclaves R0 à Rp reçoivent un signal logique de commande de décalage G0 tel qu'ils échantillonnent sur front montant de ce signal G0. Ainsi, compte tenu des délais de propagation dans ces registres, on forme une pile à l'aide des registres R1 à Rp, telle qu'à chaque front montant de G0, le contenu d'un registre est transféré dans le registre suivant.

Le signal G0 est produit par la sortie d'une porte logique ET 37 à deux entrées, recevant sur ses deux entrées le signal d'horloge H d'une part, et un signal fourni par une sortie d'un registre maître-esclave 38 (à une entrée et une sortie) d'autre part. Ce registre maître-esclave a son entrée connectée à la sortie d'une porte logique OU 39 à deux entrées, et reçoit le signal logique /H de telle manière qu'il échantillonne sur front montant de /H.

La porte OU 39 a une entrée connectée à l'entrée 32 du circuit de mémorisation, et son autre entrée est connectée à la sortie d'un inverseur 40 ayant son entrée connectée à l'entrée 29 du circuit de mémorisation.

L'entrée 29 reçoit le signal logique de commande TONWNCY de l'unité de commande de programme 3.

L'entrée 32 reçoit le signal logique de commande RS du dispositif de contrôle d'émulation 18.

La sortie de l'inverseur 40 est connectée d'autre part à l'entrée d'un registre maître-esclave 42 (à une entrée et une sortie) échantillonnant sur front montant du signal d'horloge H, la sortie de ce registre 42 étant connectée à une entrée d'un registre maître-esclave 43 (à une entrée et une sortie) échantillonnant également sur front montant du signal d'horloge H.

La sortie du registre maître-esclave 43 est connectée à :
- une entrée d'une porte ET 45 à deux entrées dont la sortie fournit le signal de commande logique TOPCD au multiplexeur 20 par le biais d'une des sorties 33 du circuit de mémorisation 10,
- une entrée d'un inverseur 46 dont la sortie est connectée à une entrée d'une porte ET 47 à deux entrées, la sortie de cette porte ET fournissant le signal logique de commande TOPC au multiplexeur 20 par le biais d'une des sorties 33 du circuit de mémorisation.

Les portes ET 45 et 47 reçoivent du dispositif de contrôle d'émulation sur leurs autres entrées, le signal logique de commande DUMP par le biais de l'entrée 31 du circuit de mémorisation 10.

D'autre part, le circuit de mémorisation comprend un circuit tampon trois états 41 (en anglais "tristate buffer") ayant un port d'entrée et un port de sortie, son port d'entrée ayant n entrées connectées aux sorties du premier registre R1 de la pile ; son port de sortie ayant n sorties connectées aux lignes du bus d'adresses 13 (port de sortie 30 du circuit de mémorisation). Le circuit tampon 41 reçoit la commande logique RS pour sélectivement connecter les sorties du registre R1 aux lignes du bus 13, ou isoler ces sorties des lignes du dit bus. Les registres R2 et R3 de la pile ont chacun leurs sorties reliées à un port d'entrée du multiplexeur 20.

Les opérations d'adressage de la mémoire 5, de décodage par le séquenceur 9 et d'exécution par l'unité centrale sont temporellement synchronisées sur le signal d'horloge H. Par exemple, on supposera que la synchronisation est faite sur front montant de ce signal. Ainsi, si on souhaite exécuter une instruction d'un mot et d'un cycle (instruction dite unicycle, un cycle correspondant à une période du signal d'horloge) le compteur de programme 9 positionne l'adresse du mot sur le bus d'adresses d'instructions sur un front montant de H. Après un certain délai, inférieur à un temps de cycle de l'horloge H, la mémoire positionne le mot lu à l'adresse présente sur le bus 11. Ce mot est décodé par le séquenceur 9 à partir du front montant du signal d'horloge suivant. Puis, sur le front montant suivant celui qui marque le début du décodage du mot, l'instruction (qui comporte un mot d'un cycle) est exécutée. Le traitement de l'instruction est donc effectué sur trois cycles, un pour l'adressage, un pour le décodage, et un pour l'exécution. Une instruction peut nécessiter plusieurs accès mémoire (pour lire plusieurs mots). Dans ce cas, elle est dite multicycle. Une instruction peut nécessiter un temps d'exécution durant plusieurs cycles mais un seul accès mémoire (un mot, m cycles, avec m un nombre entier supérieur à 1). Une telle instruction sera également dite multicycle. Dans le cas d'une instruction multicycle, l'adressage du mot et son décodage sont effectués sur autant de cycles que l'exécution de l'instruction afin de garantir un traitement temporel homogène des instructions se succédant.

Comme on l'a dit, le circuit de mémorisation a pour but de mémoriser dans le circuit l'adresse d'un mot de chaque instruction quand celle-ci est exécutée. Cette mémorisation s'effectue dans la pile formée des p registres maîtres-esclaves R1 à Rp. On mémorise donc au plus p adresses correspondant aux p dernières instructions exécutées. Cette mémorisation est temporaire. En effet, si on exécute plus de p instructions, celles-ci disparaîtront progressivement de la pile par le biais du registre Rp. En pratique, on fixera le nombre p tel qu'il permette de mémoriser assez d'adresses pour être à peu près certain de garantir que l'on puisse, quand on lit la pile, savoir où on se trouve dans le programme, sans pour autant occuper une surface trop importante.

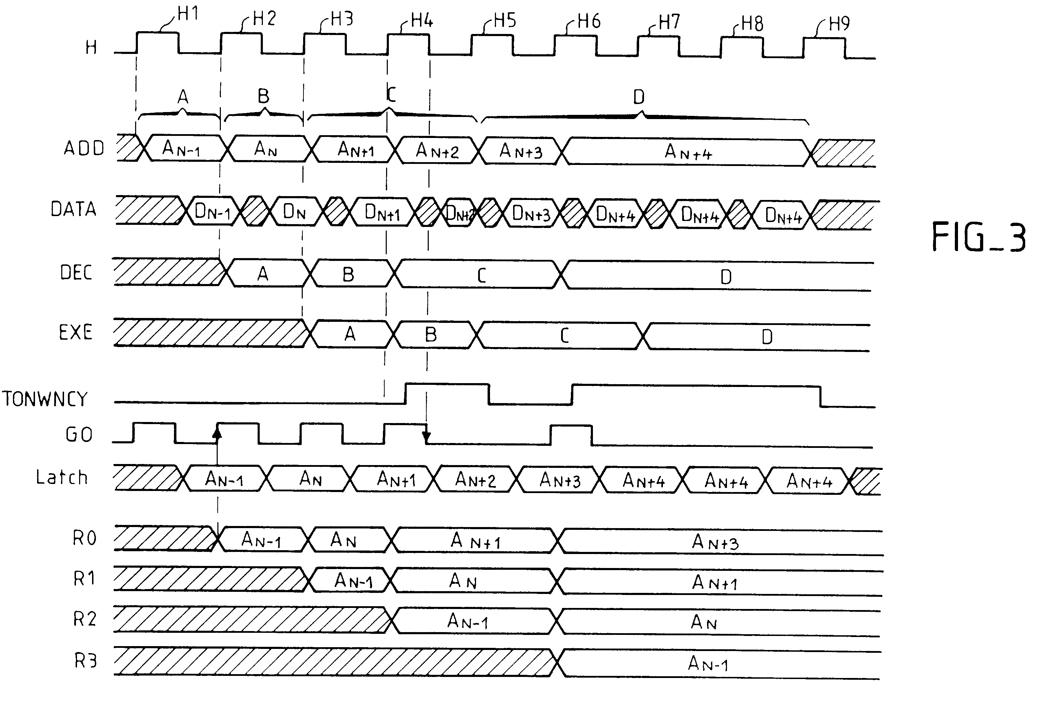

La figure 3 illustre le déroulement temporel de l'empilage dans la pile des registres R1 à Rp.

On considère par exemple l'exécution de 4 instructions A, B, C, D telles que :
- A est une instruction 1 mot, 1 cycle, le mot codant cette instruction étant noté D_{N-1}, et situé à une adresse de la mémoire 3 notée A_{N-1}.
- B est une instruction 1 mot, 1 cycle, le mot codant cette instruction étant noté D_{N}, et situé à une adresse de la mémoire 3 noté A_{N}.
- C est une instruction 2 mots, 2 cycles, chaque mot impliquant 1 cycle d'adressage, de décodage et d'exécution. Les mots codant l'instruction C sont notés D_{N+1} et D_{N+2} et sont situés à deux adresses notées A_{N+1} et A_{N+2}.
- D est une instruction 2 mots, 4 cycles. Un premier mot D_{N+3} nécessite un cycle pour son traitement et est situé à une adresse A_{N+3}, et un deuxième mot D_{N+4} nécessite 3 cycles de traitement et est située à une adresse A_{N+4}.

Pour exécuter une série d'instructions nécessitant en tout q temps de cycles pour l'exécution, avec q un entier, la structure de pipeline implique que l'intervalle entre le début de l'adressage du premier mot de la première instruction et la fin de l'exécution de la dernière instruction a une durée de q + 2 temps de cycle puisque le début du décodage d'une instruction est décalé d'un temps de cycle par rapport au début de son adressage, et que le début de l'exécution d'une instruction est décalée d'un temps de cycle par rapport au début de son décodage. Dans l'exemple ci-dessous, la série A, B, C, D nécessite une durée de 8 temps de cycle pour être exécutée, et la fin de l'exécution de l'instruction D correspondra donc à la fin du cycle H10, en notant Hj, j entier, les cycles successifs et en notant H1 le cycle correspondant à la présence de l'adresse A_{N-1} sur le bus d'adresses d'instructions.

On a donc le schéma temporel suivant :
H1 adressage du mot D_{N-1} de l'instruction A,
H2 : décodage de A (1 mot), adressage de B (1 mot),
H3 : exécution de A, décodage de B, adressage du premier mot de C,
H4 : exécution de B, début du décodage de C, adressage du deuxième mot de C,
H5 : début de l'exécution de C, fin du décodage de C, adressage du premier mot de D,
H6 : fin de l'exécution de C, début du décodage de D, adressage du second mot de D,
H7 : début de l'exécution de D,
H8 : fin de l'adressage de D,
H9 : fin du décodage de D,
H10 : fin de l'exécution de D.

On va, pour réaliser l'invention, mémoriser l'adresse A_{N-1} lors du cycle H3 (instruction A), l'adresse A_{N} lors du cycle H4 (instruction B), l'adresse A_{N+1} lors du cycle H5 (instruction C), et l'adresse A_{N+3} lors du cycle H7 (instruction D).

Comme on l'a vu, la bascule à verrouillage L est transparente quand /H = 1, c'est-à-dire quand H = 0. Cela correspond au deuxième demi-cycle de l'horloge, si on considère que le signal d'horloge est haut pendant un premier demi-cycle puis se passe ensuite à l'état bas (synchronisation du traitement des instructions sur front montant du signal d'horloge, front considéré comme marquant le début d'un cycle).

Les adresses présentes sur le bus d'adresse d'instructions seront donc disponibles à la sortie de la bascule à verrouillage L durant une durée d'un temps de cycle.

On va maintenant détailler les signaux de commande nécessaires au fonctionnement du circuit de mémorisation.

Le circuit de mémorisation reçoit le signal logique de commande TONWNCY de l'unité de commande de programme. Ce signal est tel qu'il est mis à l'état 1 pendant une durée de q-1 temps de cycle q entier pour une instruction nécessitant q temps de cycles, et à l'état 0 sinon. Ainsi, en supposant que les instructions, s'il y en a eu, qui ont été décodées avant A étaient de type unicycle, le signal TONWNCY est à l'état 0 jusqu'au moment du décodage de C, puisque c'est à ce moment là qu'on connaît le nombre de cycles nécessaires à l'exécution de C. On a considéré un certain retard entre le début du décodage de C et le passage à 1 du signal TONWNCY. Par exemple, par rapport au front montant du cycle H4, le signal TONWNCY passe à l'état 1 au bout d'une durée d'un quart de temps de cycle et repasse à l'état 0 au bout d'une durée d'un quart de temps de cycle après le front montant du cycle suivant H5.

Le signal logique de commande RS, reçu du dispositif de contrôle d'émulation, est utilisé pour lire la pile et on le suppose pour l'instant à l'état 0, de telle manière que le multiplexeur 36 relie l'entrée du registre R1 à la sortie du registre R0, dit registre d'entrée de pile.

Dans ces conditions, la sortie de la porte OU 39 va suivre les évolutions du signal /TONWNCY.

Le registre maître-esclave 38, verrouillant sur front descendant de H, va donc suivre les évolutions de /TONWNCY avec un retard, ici d'une durée d'un quart de temps de cycle.

Tant que la sortie de ce registre 38 va être à l'état 1, le signal de commande G0, réglant le décalage dans les registres de la pile, et produit par la porte ET 37, va suivre les évolutions du signal d'horloge H. Si une instruction dure plusieurs temps de cycle, ce signal G0 va passer à un état permanent 0 à partir du premier front descendant de H suivant le début du décodage de ce mot, et ce jusqu'au moment du début du décodage de l'instruction suivante.

Les registres R0 à Rp verrouillant sur front montant de G0, on aura ainsi l'évolution temporelle suivante :
- H2 : mémorisation dans R0 de A_{N-1} au début du décodage de A,
- H3 : mémorisation dans R1 de A_{N-1} au début de l'exécution de A et mémorisation dans R0 de A_{N} (début du décodage de B),
- H4 et H5 mémorisation dans R2 de A_{N-1}, mémorisation dans R1 de A_{N} et mémorisation dans RO de A_{N+1},
- H6 à H9 : mémorisation dans R3 de A_{N-1}, mémorisation dans R2 de A_{N}, mémorisation dans R1 de A_{N+1} et mémorisation dans R0 de A_{N+3}.

La mémorisation dans le registre d'entrée de pile R0 étant synchronisée sur le début de décodage des instructions, on a bien une mémorisation dans la pile qui est synchronisée avec l'exécution des instructions puisque le début d'une exécution d'une instruction démarre avec un temps de cycle de retard par rapport au décodage de cette instruction.

La présence de la bascule à verrouillage L s'explique par le fait qu'une adresse n'est jamais positionnée sur le bus d'adresses d'instructions exactement au moment du front montant du signal d'horloge mais avec un petit retard, de l'ordre de quelques nanosecondes typiquement. Sinon, on aurait pu mettre un registre maître-esclave à la place de cette bascule, ce qui, en fait, est peu intéressant puisque cette solution aurait occupé une place plus importante.

Quand on souhaite lire le contenu de la pile, on positionne le signal de commande RS à 1. La pile est alors rebouclée sur elle-même par le biais du multiplexeur 36 et la sortie du premier registre R1 est connectée au bus de données 15 par le biais du circuit tampon 41.

Sur le front descendant suivant de H, le signal présent à la sortie du registre maître-esclave 38 va passer à l'état 1. Puis, à partir du front montant suivant de H, le signal G0 va commencer à recopier le signal H, décalant progressivement les valeurs mémorisées dans la pile, d'un registre vers le registre suivant. On va donc trouver progressivement sur le bus de données 15 les contenus de R1, Rp, Rp₋₁, etc. Au pième front montant de G0, tout le contenu de la pile aura été progressivement placé sur le bus 15.

Le fait de sortir par le premier registre de la pile permet d'être sûr que la première valeur de la pile qui est disponible sur le bus 15 correspond à une adresse d'une instruction qui a été exécutée, dans la mesure bien évidemment où, quand on lit la pile, on a effectivement commencé à exécuter un programme, le cas contraire ne présentant pas d'intérêt.

Le rebouclage de la pile sur elle-même a un autre intérêt qui est de permettre un retour du contenu de la pile à un état connu avant lecture si on s'assure de produire autant de décalages dans la pile que le nombre de registres formant la pile. Dans ce cas, la lecture de la pile n'affectera pas le contenu des registres avant lecture.

Le fait de sortir le contenu de la pile sur un bus de données, utilisé par ailleurs par le circuit quand on ne lit pas la pile, permet de s'affranchir la présence de moyens spécifiques dédiés à la transmission de ce contenu vers l'extérieur. Il est toutefois nécessaire que ce bus soit accessible sur un port d'entrée/sortie du circuit intégré. On pourrait envisager une sortie en série vers l'extérieur du circuit. Néanmoins, cela imposerait de convertir le contenu des registres de la pile dans un registre parallèle-série par exemple, ce qui augmenterait la taille du circuit et qui ralentirait le temps de lecture du contenu de la pile, puisqu'on devrait attendre la sortie en série du contenu de chaque registre avant de charger le contenu du registre suivant.

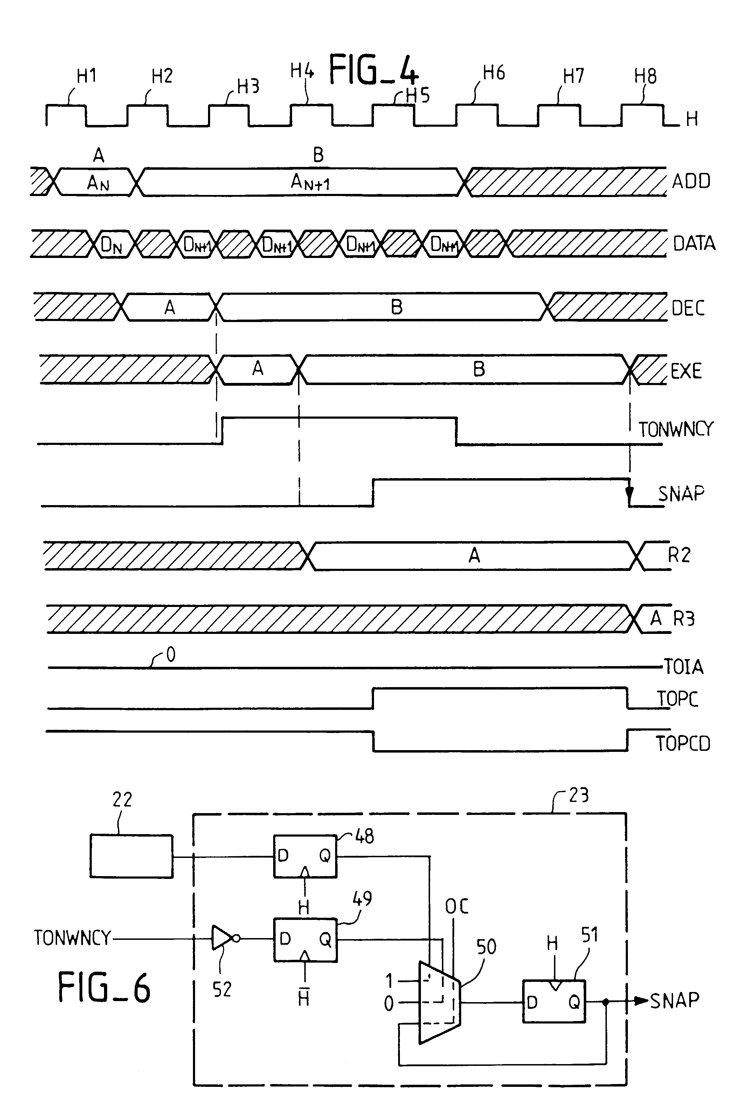

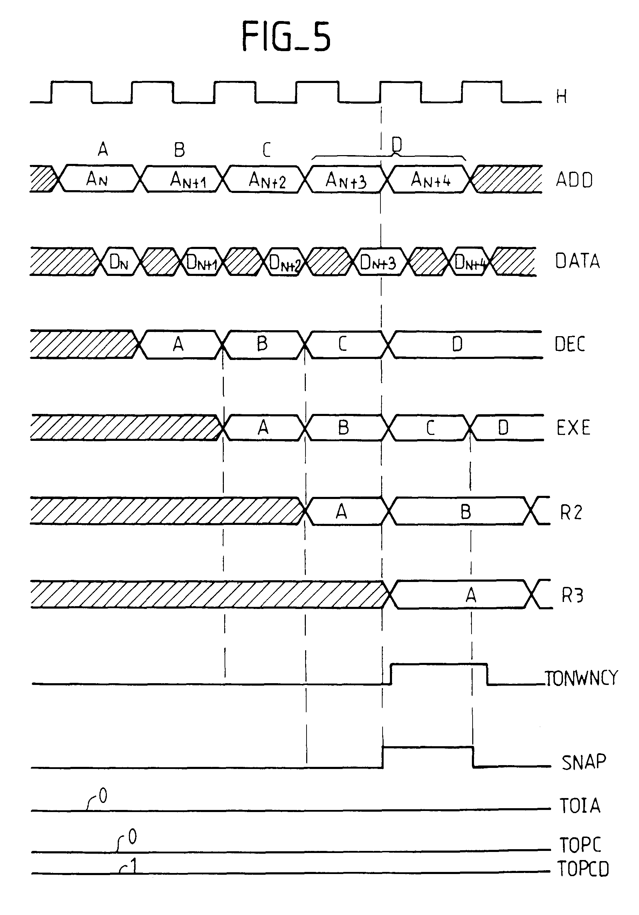

Les figures 4 et 5 illustrent des chronogrammes correspondant à une mémorisation du contenu d'un registre de la pile dans des cellules du registre à décalage H. Ce type de registre peut être utilisé pour échantillonner les valeurs de signaux présents sur des lignes d'un circuit (voir EP 0 578 540). Pour le test de programme, de tels registres permettent d'échantillonner ces valeurs sans arrêter le déroulement du programme, en effectuant en quelque sorte un cliché instantané (en anglais, snapshot) des valeurs des signaux présents.

En pratique, cet échantillonnage est produit par un événement particulier, par exemple la présence d'une donnée particulière sur un bus de données, et fait donc suite à l'exécution d'une instruction du programme, sans que l'on puisse forcément connaître la partie du programme ayant provoqué l'événement particulier.

L'invention trouve une application particulièrement avantageuse dans un tel mode de fonctionnement, dit snapshot. En effet, l'invention permet de retrouver l'adresse du premier mot de l'instruction ayant provoqué l'évènement particulier, par le biais de la pile.

Dans l'exemple de réalisation proposé, le registre de la pile contenant l'adresse du premier mot de l'instruction ayant provoqué l'évènement sera soit le deuxième, soit le troisième registre de la pile.

Le multiplexeur 20 connecte son port de sortie à l'un de ses trois ports d'entrée quand un signal de commande correspondant à cette entrée est dans un état logique donné (ici l'état 1), chaque entrée ayant un signal de commande associé (TOIA, TOPCD, TOPC), et un seul signal étant à l'état 1 à la fois. Si TOIA = 1, on relie le port de sortie du multiplexeur 20 au bus d'adresses d'instructions. Ti TOPCD = 1, on relie ce port aux sorties du registre R3. Si TOPC = 1, on relie ce port aux entrées du registre R2.

Le signal DUMP, quand il est à 1, permet de relier la sortie du multiplexeur 20 soit à la sortie du registre R2, soit à la sortie du registre R3. Quand il est à 0, les cellules du registre à décalage connectées à la sortie du multiplexeur sont reliées au bus d'adresses d'instructions, autorisant ainsi une utilisation classique du registre à décalage, telle que le forçage d'une adresse sur ce bus depuis l'extérieur du circuit.

D'après ce qui a été décrit précédemment, on voit bien que pour déterminer dans quel registre de la pile est mémorisée l'adresse du premier mot de l'instruction ayant provoqué l'évènement, on doit tenir compte du nombre de cycles nécessaires à l'exécution de l'instruction suivante. En effet, on ne souhaite pas interrompre le déroulement du programme et de ce fait, des instructions auront pu être exécutées après celle provoquant l'évènement, et donc mémorisées (par le biais de l'adresse de leur premier mot) dans la pile.

On suppose que, de manière classique, l'échantillonnage dans les cellules est commandé par un signal logique de commande SNAP. Les cellules ne sont pas décrites, ce type de cellules étant par ailleurs largement connu.

On produit un signal SNAP tel que l'échantillonnage se produit sur front descendant de ce signal SNAP, et ce :
- après l'exécution de l'instruction suivante de celle provoquant l'évènement, si cette instruction est multicycle,
- après l'exécution de la deuxième instruction suivant l'instruction qui a provoqué l'évènement, si l'instruction suivant celle provoquant l'évènement est unicycle.

Dans le premier cas, le registre de la pile contenant l'adresse intéressante est le deuxième registre de la pile. Dans le second cas, il s'agit bien sûr du troisième registre de la pile.

La figure 4 illustre le premier cas.

On suppose une instruction A provoquant l'évènement, cette instruction A étant suivie d'une instruction B d'une durée de quatre cycles. On supposera par ailleurs que l'instruction A est unicycle et est codée par un mot D_{N} se trouvant à une adresse A_{N} dans la mémoire de programme.

En notant H1 le cycle correspondant au positionnement de l'adresse A_{N} sur le bus d'adresses d'instructions, l'instruction A sera décodée durant le cycle H2 suivant, puis exécutée lors du cycle H3.

L'instruction B sera adressée durant les cycles H2 à H5, décodée durant les cycles H3 à H6, et exécutée durant les cycles H4 à H7.

On va donc échantillonner le contenu du registre R2 au début du cycle H8.

L'évènement se produit suite à l'exécution de l'instruction A. Par exemple, cette instruction aura provoqué le positionnement d'une donnée particulière sur le bus de données 15, ce bus étant relié à l'entrée du comparateur 21. Ce comparateur compare le signal véhiculé par ce bus au contenu du registre 22, de telle manière qu'il passe à l'état 1 si les valeurs sont égales, et ce durant un cycle.

Le signal de sortie du comparateur est combiné avec le signal TONWNCY dans le bloc logique 23, illustré figure 6.

Ce bloc logique comprend un premier, un deuxième et un troisième registres maîtres-esclaves, respectivement référencés 48, 49 et 51, à une entrée et une sortie. Il comprend par ailleurs un multiplexeur 50 à trois entrées et une sortie. Une première entrée du multiplexeur reçoit un signal logique d'état permanent 1. Une deuxième entrée de ce multiplexeur reçoit un signal logique d'état permanent 0. La troisième entrée du multiplexeur 50 est reliée à la sortie du registre 51, et ce registre verrouillant sur front montant du signal d'horloge H.

Le premier registre maître-esclave 48 a son entrée reliée à la sortie du comparateur 21. Sa sortie est reliée au multiplexeur 50, de telle sorte qu'il relie la sortie du multiplexeur à sa première entrée si le signal en sortie du registre 48 est à l'état 1.

Le deuxième registre maître-esclave 49 a son entrée reliée à la sortie d'un inverseur 52 recevant TONWNCY en entrée. Sa sortie est reliée au multiplexeur 50 de telle sorte qu'il relie la sortie du multiplexeur à sa deuxième entrée si le signal de sortie du registre 49 est à l'état 1.

Le premier et le deuxième registres maîtres-esclave 48 et 49 verrouillent sur front montant du signal d'horloge /H.

Le multiplexeur 50 reçoit un troisième signal de commande OC pour relier la sortie à sa troisième entrée si les signaux délivrés par les registres maîtres-esclaves 48 et 49 sont à l'état 0.

### Cas où l'instruction (B) suivant celle (A) qui a provoqué l'évènement attendu est multicycle (figure 4) :

- un temps de cycle après l'exécution de l'instruction A, le signal SNAP passe à 1,
- deux temps de cycles après le retour à l'état 0 du signal TONWNCY, le signal SNAP passe à 0, provoquant l'échantillonnage du contenu du registre R2 dans les cellules du registre à décalage.

### Cas où l'instruction (B) suivant celle (A) qui a provoqué l'événement attendu est unicycle (figure 5) :

- un temps de cycle après l'exécution de l'instruction A, le signal SNAP passe à 1,
- un temps de cycle plus tard, il passe à 0, provoquant l'échantillonnage du contenu du registre R3 dans les cellules du registre à décalage.

Dans le premier cas, il y a un changement dans la sélection des entrées du multiplexeur 20, car tant que TONWNCY est à 0, ce sont les sorties du registre R3 qui sont reliées aux cellules du registre à décalage (TOPCD = 1).

On voit bien l'intérêt que présente l'invention dans le cadre d'un mode de fonctionnement de type snapshot. Il suffit que le dispositif de test reçoive le signal SNAP par le biais d'une borne du circuit pour qu'on sache qu'un échantillonnage a eu lieu dans le registre à décalage. Il suffit alors de procéder à la sortie en série du contenu des cellules du registre pour connaître à quel endroit du programme se situe l'instruction ayant provoqué l'évènement induisant l'échantillonnage.

Dans le mode de réalisation décrit, on notera qu'en mode de fonctionnement de type snapshot, on n'échantillonne pas les valeurs des signaux présents sur le bus d'adresses d'isntructions. Ces valeurs n'ont pas vraiment d'intérêt dans la mesure où elles correspondent à l'adresse d'une instruction non encore exécutée. On pourrait néanmoins utiliser deux séries de cellules dans le registre pour échantillonner d'une part la valeur des signaux de ce bus et d'autre part le contenu d'un des registres de la pile, auquel cas on se contentera d'un multiplexeur 20 à deux ports d'entrée. On ralentirait alors la sortie et l'entrée de valeurs dans le registre à décalage, celui-ci comprenant un nombre de cellules plus important.

Bien qu'on ait décrit l'invention en référence à un exemple de réalisation préférée, on comprendra que cet exemple n'est pas limitatif et que diverses modifications peuvent lui être apportées sans sortir du cadre de l'invention.

## Revendications

1. Procédé pour tester le déroulement d'un programme d'instructions exécutées par un circuit intégré spécialisé comprenant une unité centrale, et des dispositifs dépendants de l'application du circuit, ces dispositifs comprenant au moins une mémoire de programme comprenant un programme d'instructions à exécuter, chaque instruction comprenant un ou plusieurs mots et durant un ou plusieurs cycles, chaque mot étant mémorisé à un emplacement de la mémoire,
le traitement d'une instruction comprenant successivement :
- le positionnement par un compteur de programme de l'adresse du mot ou des adresses successives des mots de l'instruction sur un bus d'adresse d'instruction à n bits, n étant un entier, reliant l'unité centrale à la mémoire de programme,
- le positionnement par la mémoire de programme, après lecture de chaque mot, de ce mot sur un bus de données d'instruction reliant l'unité centrale à la mémoire,
- le décodage des mots par un séquenceur de l'unité centrale,
- l'exécution de l'instruction par l'unité centrale, caractérisé en ce que
pour chaque instruction, on mémorise dans le circuit intégré l'adresse d'un mot de cette instruction au cours du traitement de l'instruction, et
en ce que l'adresse du mot à mémoriser est mémorisée au moment de l'exécution de l'instruction dont l'adresse est représentative.

2. Procédé selon la revendication 1, caractérisé en ce que l'adresse mémorisée est l'adresse du premier mot de l'instruction.

3. Procédé selon l'une des revendications 1 ou 2, caractérisé en ce que l'adresse est mémorisée dans un registre parmi p registres parallèle-parallèle à n entrées et n sorties, avec p un entier, montés en série de manière à former une pile et reliés au bus d'adresse par le biais de n bascules à verrouillage et d'un registre parallèle-parallèle, à n entrées et n sorties, d'entrée de pile.

4. Procédé selon la revendication 3, caractérisé en ce que pour mémoriser une adresse :
- on mémorise dans les bascules à verrouillage cette adresse lorsqu'elle est présente sur le bus d'adresse,
- on mémorise dans le registre d'entrée de pile ladite adresse lorsqu'elle est décodée, et
- on mémorise ladite adresse dans la pile lorsque l'instruction dont est représentative cette adresse est exécutée.

5. Procédé selon l'une des revendications 3 ou 4, caractérisé en ce les entrées du premier registre de la pile sont connectées sélectivement par le biais d'un multiplexeur aux sorties du registre d'entrée de pile ou aux sorties du dernier registre de la pile.

6. Procédé selon l'une des revendications 3 ou 4, caractérisé en ce que la lecture du contenu de la pile s'effectue à partie des sorties d'un des registres de la pile, les entrées du premier registre étant reliées aux sorties du dernier registre de la pile, les contenus des registres étant successivement transférés d'un registre au registre suivant.

7. Procédé selon la revendication 6, caractérisé en ce que la lecture du contenu de la pile s'effectue à partir des sorties du premier registre de la pile.

8. Procédé selon l'une des revendications 6 ou 7, caractérisé en ce que , pendant la lecture de la pile, les sorties du registre utilisé pour la lecture sont reliées à un bus accessible de l'extérieur du circuit intégré.

9. Procédé selon la revendication 8, caractérisé en ce que le bus utilisé pour lire le contenu de la pile est un bus de données à n bits.

10. Procédé selon l'une des revendications 1 à 9, caractérisé en ce que le circuit comporte des moyens pour mémoriser, dans un mode particulier, dans un registre à décalage formé de cellules élémentaires montées chacune sur des lignes du circuit intégré, l'état de ces lignes quand l'exécution d'une instruction provoque un évènement particulier.

11. Procédé selon la revendication 10, caractérisé en ce que le contenu du registre de la pile correspondant à l'adresse représentative de l'instruction ayant provoqué l'évènement est mémorisée dans des cellules élémentaires de ce registre à décalage.

12. Procédé selon la revendication 11, caractérisé en ce que les cellules élémentaires dans lesquelles sont mémorisées le contenu du registre contenant l'adresse représentative de l'instruction ayant provoqué l'évènement sont connectées sur les lignes du bus d'adresses d'instructions quand le mode particulier n'est pas sélectionné.

13. Procédé selon l'une des revendications 11 ou 12, caractérisé en ce qu'on mémorise dans le registre à décalage le contenu du deuxième registre de la pile si l'instruction suivant celle qui a provoqué l'évènement particulier est multicycles, et qu'on mémorise dans le registre à décalage le contenu du troisième registre de la pile si l'instruction qui suit celui qui a provoqué l'évènement est unicycle.

14. Procédé selon l'une des revendications 3 à 13, caractérisé en ce que la pile contient six registres.

15. Circuit intégré spécialisé comprenant une unité centrale, et des dispositifs dépendants de l'application du circuit, ces dispositifs comprenant au moins une mémoire de programme comprenant un programme d'instructions à exécuter, chaque instruction comprenant un ou plusieurs mots et durant un ou plusieurs cycles, chaque mot étant mémorisé à un emplacement de la mémoire,
le traitement d'une instruction comprenant successivement :
- le positionnement par un compteur de programme de l'adresse du mot ou des adresses successives des mots de l'instruction sur un bus d'adresse d'instruction à n bits, n étant un entier, reliant l'unité centrale à la mémoire de programme,
- le positionnement par la mémoire de programme, après lecture de chaque mot, de ce mot sur un bus de données d'instruction reliant l'unité centrale à la mémoire,
- le décodage des mots par un séquenceur de l'unité centrale,
- l'exécution de l'instruction par l'unité centrale, caractérisé en ce que
ledit circuit comporte des moyens de mémorisation agencés pour mémoriser, lors du traitement de chaque instruction, l'adresse d'un mot de cette instruction, et
en ce que les moyens de mémorisation sont agencés de manière telle que l'adresse du mot soit mémorisée au moment de l'exécution de l'instruction dont l'adresse est représentative.

16. Circuit selon la revendication 15 caractérisé en ce que les moyens de mémorisation sont agencés de manière telle que, pour chaque instruction, l'adresse mémorisée est l'adresse du premier mot de l'instruction.

17. Circuit selon l'une des revendications 15 ou 16, caractérisé en ce qu'il comprend p registres parallèle-parallèle à n entrées et n sorties, avec p un entier, montés en série de manière à former une pile et reliés au bus d'adresse par le biais de n bascules à verrouillage et d'un registre parallèle-parallèle, à n entrées et n sorties, d'entrée de pile.

18. Circuit selon la revendication 17, caractérisé en ce les entrées du premier registre de la pile sont connectées sélectivement par le biais d'un multiplexeur aux sorties du registre d'entrée de pile ou aux sorties du dernier registre de la pile.

19. Circuit selon l'une des revendications 17 ou 18, caractérisé en ce qu'il comprend des moyens pour connecter les sorties d'un registre de la pile à un bus accessible de l'extérieur du circuit intégré.

20. Circuit selon l'une des revendications 15 à 19, caractérisé en ce qu'il comprend un registre à décalage et des moyens pour mémoriser, dans un mode particulier, dans ce registre à décalage formé de cellules élémentaires montées sur des lignes du circuit intégré, l'état de ces lignes quand l'exécution d'une instruction provoque un évènement particulier.

21. Circuit selon la revendication 20, caractérisé en ce qu'il comprend des moyens pour connecter les sorties du registre de la pile dont le contenu correspond à l'adresse représentative de l'instruction ayant provoqué l'évènement à des cellules élémentaires de ce registre à décalage.

22. Circuit selon l'une des revendications 15 à 21, caractérisé en ce que la pile contient six registres.

## Patentansprüche

1. Verfahren zum Testen des Ablaufs eines Programms mit Befehlen, die durch einen speziellen integrierten Schaltkreis abgearbeitet werden, der eine Zentraleinheit sowie Vorrichtungen, die von der Anwendung des Schaltkreises abhängen, umfaßt, wobei diese Vorrichtungen wenigstens einen Programmspeicher umfassen, der ein Programm mit auszuführenden Befehlen umfaßt, wobei jeder Befehl ein oder mehrere Worte umfaßt und einen oder mehrere Zyklen dauert, wobei jedes Wort an einem Ort in dem Speicher abgelegt ist,
wobei die Verarbeitung eines Befehls nacheinander umfaßt:
- das Positionieren der Adresse des Wortes oder der aufeinanderfolgenden Adressen von Worten des Befehls durch einen Programmzähler auf einem Befehlsadressenbus mit n Bit, wobei n eine ganze Zahl ist, der die Zentraleinheit mit dem Programmspeicher verbindet,
- das Positionieren durch den Programmspeicher nach dem Lesen jedes Wortes dieses Wortes auf einem Befehlsdatenbus, der die Zentraleinheit mit dem Speicher verbindet,
- das Dekodieren von Worten durch einen Sequenzierer der Zentraleinheit,
- die Ausführung des Befehls durch die Zentraleinheit, dadurch gekennzeichnet, daß
für jeden Befehl in dem integrierten Schaltkreis die Adresse eines Wortes dieses Befehls im Verlauf der Bearbeitung dieses Befehls abgelegt wird, und
dadurch daß die Adresse des abzulegenden Wortes in dem Moment der Ausführung des Befehls abgelegt wird, dessen Adresse vorliegt.

2. Verfahren nach Anspruch 1, dadurch gekennzeichnet, daß die abgelegte Adresse die Adresse des ersten Wortes des Befehls ist.

3. Verfahren nach einem der Ansprüche 1 oder 2, dadurch gekennzeichnet, daß die Adresse abgelegt wira in einem Register unter p Parallel-Parallel-Registern mit n Eingängen und n Ausgängen, wobei p eine ganze Zahl ist, die derart in Serie geschaltet sind, daß sie einen Stapel bilden und mit dem Adreßbus über n Verriegelungskippstufen und ein Parallel-Parallel-Register mit n Eingängen und n Ausgängen am Eingang des Stapels verbunden sind.

4. Verfahren nach Anspruch 3, dadurch gekennzeichnet, daß zum Ablegen einer Adresse:
- in den Verriegelungskippstufen diese Adresse abgelegt wird, wenn sie auf dem Adreßbus anliegt,
- in dem Eingangsregister des Stapels diese Adresse abgelegt wird, wenn sie dekodiert ist, und
- diese Adresse in dem Stapel abgelegt wird, wenn der Befehl, den diese Adresse angibt, ausgeführt wird.

5. Verfahren nach einem der Ansprüche 3 oder 4, dadurch gekennzeichnet, daß die Eingänge des ersten Registers des Stapels selektiv über einen Multiplexer mit den Ausgängen des Eingangsregisters des Stapels oder den Ausgängen des letzten Registers des Stapels verbunden werden.

6. Verfahren nach einem der Ansprüche 3 oder 4, dadurch gekennzeichnet, daß das Lesen des Inhalts des Stapels stattfindet über die Ausgänge eines der Register des Stapels, wobei die Eingänge des ersten Registers mit den Ausgängen des letzten Registers des Stapels verbunden sind, wobei die Inhalte der Register sukzessive von einem Register auf das folgende Register übertragen werden.

7. Verfahren nach Anspruch 6, dadurch gekennzeichnet, daß das Lesen des Inhalts des Stapels über die Ausgänge des ersten Registers des Stapels erfolgt.

8. Verfahren nach einem der Ansprüche 6 oder 7, dadurch gekennzeichnet, daß während des Lesens des Stapels die Ausgänge des für das Lesen verwendeten Registers mit einem Bus verbunden sind, auf den von außerhalb des integrierten Schaltkreises zugegriffen werden kann.

9. Verfahren nach Anspruch 8, dadurch gekennzeichnet, daß der verwendete Bus zum Lesen des Inhalts des Stapels ein Datenbus mit n Bit ist.

10. Verfahren nach einem der Ansprüche 1 bis 9, dadurch gekennzeichnet, daß der Schaltkreis Vorrichtungen zum Ablegen in einem speziellen Modus in einem Schieberegister aus Elementarzellen, die jeweils auf den Leitungen des integrierten Schaltkreises angeordnet sind, umfaßt, wobei der Zustand dieser Leitungen bei der Ausführung eines Befehls ein spezielles Ereignis hervorruft.

11. Verfahren nach Anspruch 10, dadurch gekennzeichnet, daß der Inhalt des Registers des Stapels, das der Adresse des Befehls entspricht, der das Ereignis herbeigeführt hat, abgelegt wird in den Elementarzellen dieses Schieberegisters.

12. Verfahren nach Anspruch 11, dadurch gekennzeichnet, daß die Elementarzellen, in welchen der Inhalt des Registers, das die Adresse des Befehls enthält, der das Ereignis herbeigeführt hat, abgelegt wurde, verbunden sind über Leitungen des Befehlsadressenbusses, wenn der spezielle Modus nicht ausgewählt worden ist.

13. Verfahren nach einem der Ansprüche 11 oder 12, dadurch gekennzeichnet, daß in dem Schieberegister der Inhalt des zweiten Registers des Stapels abgelegt wird, wenn der Befehl, der dem folgt, der das spezielle Ereignis herbeigeführt hat, mehrere Zyklen braucht, und in dem Schieberegister der Inhalt des dritten Registers des Stapels abgelegt wird, wenn der Befehl, der dem folgt, der das Ereignis herbeigeführt hat, nur einen Zyklus braucht.

14. Verfahren nach einem der Ansprüche 3 bis 13, dadurch gekennzeichnet, daß der Stapel sechs Register umfaßt.

15. Spezialisierter integrierter Schaltkreis mit einer Zentraleinheit und Vorrichtungen, die von der Anwendung des Schaltkreises abhängen, wobei diese Vorrichtungen wenigstens einen Programmspeicher umfassen, der ein Programm mit auszuführenden Befehlen umfaßt, wobei jeder Befehl ein oder mehrere Worte umfaßt und einen oder mehrere Zyklen dauert, wobei jedes Wort an einem Ort in dem Speicher abgelegt wird,
die Verarbeitung eines Befehls nacheinander umfaßt:
- das Positionieren der Adresse des Wortes oder der aufeinanderfolgenden Adressen von Worten des Befehls durch einen Programmzähler auf einem Befehlsadressenbus mit n Bit, wobei n eine ganze Zahl ist, der die Zentraleinheit mit dem Programmspeicher verbindet,
- das Positionieren durch den Programmspeicher nach dem Lesen jedes Wortes dieses Wortes auf einem Befehlsdatenbus, der die Zentraleinheit mit dem Speicher verbindet,
- das Dekodieren von Worten durch einen Sequenzierer der Zentraleinheit,
- die Ausführung des Befehls durch die Zentraleinheit, dadurch gekennzeichnet, daß
der Schaltkreis Vorrichtungen zum Abspeichern umfaßt, die geeignet sind, bei der Verarbeitung jedes Befehls die Adresse eines Wortes dieses Befehls abzuspeichern, und
dadurch daß die Vorrichtungen zum Abspeichern geeignet sind, die Adresse des Wortes im Moment der Ausführung des Befehls abzuspeichern, dessen Adresse vorliegt.

16. Schaltkreis nach Anspruch 15, dadurch gekennzeichnet, daß die Vorrichtungen zum Ablegen so ausgelegt sind, daß bei jedem Befehl die abgelegte Adresse die Adresse des ersten Wortes des Befehls ist.

17. Schaltkreis nach einem der Ansprüche 15 oder 16, dadurch gekennzeichnet, daß er p Parallel-Parallel-Register mit n Eingängen und n Ausgängen umfaßt, wobei p eine ganze Zahl ist, die in Serie derart geschaltet sind, daß sie einen Stapel bilden und mit dem Adreßbus über n Verriegelungskippstufen und ein Parallel-Parallel-Register mit n Eingängen und n Ausgängen am Eingang des Stapels verbunden sind.

18. Schaltkreis nach Anspruch 17, dadurch gekennzeichnet, daß die Eingänge des ersten Registers des Stapels selektiv über einen Multiplexer mit den Ausgängen des Eingangsregisters des Stapels oder den Ausgängen des letzten Registers des Stapels verbunden sind.

19. Schaltkreis nach einem der Ansprüche 17 oder 18, dadurch gekennzeichnet, daß er Vorrichtungen zum Verbinden der Ausgänge eines Registers des Stapels mit einem Bus umfaßt, der von außerhalb des integrierten Schaltkreises zugänglich ist.

20. Schaltkreis nach einem der Ansprüche 15 bis 19, dadurch gekennzeichnet, daß er ein Schieberegister und Vorrichtungen zum Ablegen in einem speziellen Modus in diesem Schieberegister aus Elementarzellen, die auf den Leitungen des integrierten Schaltkreises angeordnet sind, umfaßt, wobei der Zustand dieser Leitungen bei der Ausführung eines Befehls ein spezielles Ereignis herbeiführt.

21. Schaltkreis nach Anspruch 20, dadurch gekennzeichnet, daß er Vorrichtungen zum Verbinden der Ausgänge des Registers des Stapels, dessen Inhalt der Adresse des Befehls entspricht, der das Ereignis herbeigeführt hat, mit den Elementarzellen dieses Schieberegisters umfaßt.

22. Schaltkreis nach einem der Ansprüche 15 bis 21, dadurch gekennzeichnet, daß der Stapel sechs Register umfaßt.

## Claims

1. Method for testing the progress of an instruction program run by a specialised integrated circuit comprising a central unit, and devices dependent on the application of the circuit, these devices comprising at least one program memory comprising a program of instructions to be executed, each instruction comprising one or more words and lasting one or more cycles, each word being stored at a location in the memory,
the processing of an instruction comprising successively:
- the positioning by a program counter of the address of the word or of the successive addresses of the words of the instruction on an n-bit instruction address bus, n being an integer, connecting the central unit to the program memory,
- the positioning by the program memory, after the reading of each word, of this word on an instruction data bus connecting the central unit to the memory,
- the decoding of the words by a sequencer of the central unit,
- the execution of the instruction by the central unit,
characterised in that
for each instruction, the address of a word of this instruction is stored to memory in the integrated circuit during the processing of the instruction, and
in that the address of the word to be stored to memory is stored at the time of execution of the instruction represented by the address.

2. Method according to Claim 1, characterised in that the address stored to memory is the address of the first word of the instruction.

3. Method according to one of Claims 1 or 2, characterised in that the address is stored in one register amongst p parallel-parallel registers with n inputs and n outputs, with p an integer, connected in series so as to form a stack and connected to the address bus by means of n latching flip-flops and a stack input parallel-parallel register with n inputs and n outputs.

4. Method according to Claim 3, characterised in that, in order to store an address to memory:
- this address is stored in the latching flip-flops when it is present on the address bus,
- the said address is stored in the stack input register when it is decoded, and
- the said address is stored in the stack when the instruction represented by the address is executed.

5. Method according to one of Claims 3 or 4, characterised in that the inputs of the first register of the stack are connected selectively by means of a multiplexer to the outputs of the stack input register or to the outputs of the last register in the stack.

6. Method according to one of Claims 3 or 4, characterised in that the reading of the content of the stack is effected from the outputs of one of the registers of the stack, the inputs of the first register being connected to the outputs of the last register in the stack, the contents of the registers being successively transferred from one register to the following register.

7. Method according to Claim 6, characterised in that the reading of the content of the stack is effected from the outputs of the first register in the stack.

8. Method according to one of Claims 6 or 7, characterised in that, during the reading of the stack, the outputs of the register used for the reading are connected to a bus accessible from outside the integrated circuit.

9. Method according to Claim 8, characterised in that the bus used to read the content of the stack is an n-bit data bus.

10. Method according to one of Claims 1 to 9, characterised in that the circuit has means for storing, in a particular mode, in a shift register formed by elementary cells each mounted on lines of the integrated circuit, the state of these lines when the execution of an instruction gives rise to a particular event.

11. Method according to Claim 10, characterised in that the content of the register in the stack corresponding to the address representing the instruction which has given rise to the event is stored in elementary cells of this shift register.

12. Method according to Claim 11, characterised in that the elementary cells in which are stored the content of the register containing the address representing the instruction which has given rise to the event are connected to the lines of the instruction address bus when the particular mode is not selected.

13. Method according to one of Claims 11 or 12, characterised in that the content of the second register in the stack is stored in the shift register if the instruction following the one which has given rise to the particular event is multicycle, and the content of the third register in the stack is stored in the shift register if the instruction which follows the one which has given rise to the event is unicycle.

14. Method according to one of Claims 3 to 13, characterised in that the stack contains six registers.

15. Specialised integrated circuit comprising a central unit, and devices depending on the application of the circuit, these devices comprising at least one program memory comprising a program of instructions to be executed, each instruction comprising one or more words and lasting one or more cycles, each word being stored at a location in the memory,
the processing of an instruction comprising successively:
- the positioning by a program counter of the address of the word or of the successive addresses of the words of the instruction on an n-bit instruction address bus, n being an integer, connecting the central unit to the program memory,
- the positioning by the program memory, after the reading of each word, of this word on an instruction data bus connecting the central unit to the memory,
- the decoding of the words by a sequencer of the central unit,
- the execution of the instruction by the central unit, characterised in that
the said circuit has storage means arranged to store to memory, when each instruction is processed, the address of a word of this instruction, and
in that the storage means are arranged so that the address of the word is stored to memory at the time of execution of the instruction represented by the address.

16. Circuit according to Claim 15, characterised in that the storage means are arranged so that, for each instruction, the address stored is the address of the first word of the instruction.

17. Circuit according to one of Claims 15 or 16,
characterised in that it comprises p parallel-parallel registers with n inputs and n outputs, with p an integer, connected in series so as to form a stack and connected to the address bus by means of n latching flip-flops and a stack input parallel-parallel register with n inputs and n outputs.

18. Circuit according to Claim 17, characterised in that the inputs of the first register in the stack are connected selectively by means of a multiplexer to the outputs of the stack input register or to the outputs of the last register in the stack.

19. Circuit according to one of Claims 17 or 18,
characterised in that it comprises means for connecting the outputs of a register in the stack to a bus accessible from the outside the integrated circuit.

20. Circuit according to one of Claims 15 to 19,
characterised in that it comprises a shift register and means for storing, in a particular mode, in this shift register formed by elementary cells mounted on lines of the integrated circuit, the state of these lines when the execution of an instruction gives rise to a particular event.

21. Circuit according to Claim 20, characterised in that it comprises means for connecting the outputs of the register in the stack whose content corresponds to the address representing the instruction which has given rise to the event to elementary cells of this shift register.

22. Circuit according to one of Claims 15 to 21,
characterised in that the stack contains six registers.
